**Europäisches Patentamt**

**European Patent Office**

**Office européen des brevets**

(19)

(11) Veröffentlichungsnummer: **0 207 481**
**B1**

(12)

# EUROPÄISCHE PATENTSCHRIFT

(45) Veröffentlichungstag der Patentschrift:
**18.10.89**

(51) Int. Cl.⁴: **B 23 Q 17/09, B 23 B 49/00**

(21) Anmeldenummer: **86108877.1**

(22) Anmeldetag: **30.06.86**

(54) **Vorrichtung zur mechanischen Werkzeug-Bruchkontrolle bei Werkzeugmaschinen.**

(30) Priorität: **01.07.85 DE 3523510**

(43) Veröffentlichungstag der Anmeldung:
**07.01.87 Patentblatt 87/2**

(45) Bekanntmachung des Hinweises auf die Patenterteilung:
**18.10.89 Patentblatt 89/42**

(84) Benannte Vertragsstaaten:
**CH DE FR GB IT LI**

(56) Entgegenhaltungen:
**EP-A- 0 065 993**
**EP-A- 0 127 751**
**CH-A- 362 584**
**DE-A- 3 003 431**
**FR-A- 2 499 441**
**US-A- 2 920 508**

(73) Patentinhaber: **MAHO Aktiengesellschaft,**
**Postfach 1280 Tiroler Strasse 85, D-8962 Pfronten (DE)**

(72) Erfinder: **Babel, Werner, Achweg 19,**
**D-8962 Pfronten-Meilingen (DE)**

(74) Vertreter: **Patentanwälte Beetz sen. - Beetz jun. Timpe -**
**Siegfried - Schmitt-Fumian, Steinsdorfstrasse 10,**
**D-8000 München 22 (DE)**

## Beschreibung

Die Erfindung betrifft eine Vorrichtung zur Kontrolle von im Werkzeugspeicher einer Werkzeugmaschine angeordneten Werkzeugen der im Oberbegriff des Patentanspruchs 1 angegebenen Gattung.

Bei modernen Werkzeugmaschinen für Fräs- und Bohrarbeiten, bei denen eine Vielzahl von Bearbeitungsvorgängen nach einem in der elektronischen Steuerung gespeicherten Programm unter Einsatz verschiedener Werkzeuge automatisch ablaufen, sind naturgemäß eine Reihe von Überwachungs- und Kontrollfunktionen notwendig, um mögliche Fehlerquellen frühzeitig erkennen, anzeigen und ggf. auch beheben zu können. Eine in der Praxis wichtige Rolle spielt dabei das Erfassen von Werkzeugbrüchen, und zwar insbesondere von Bohrerbrüchen. Wenn nämlich eine gebrochene Bohrerspitze in der hergestellten Bohrung verbleibt und in einem anschließenden Bearbeitungsvorgang diese Bohrung mit einem weiteren Werkzeug nachgearbeitet, z.B. erweitert, werden soll, trifft dieses nachfolgende Werkzeug auf die im Loch verbliebene Bohrerspitze, was dazu führt, daß dieser nachfolgende Bearbeitungsvorgang nicht ausgeführt werden kann und daß ggf. auch das Nacharbeitungs-Werkzeug bricht. Da ferner häufig mit ein und demselben Werkzeug mehrere Bearbeitungsvorgänge am gleichen oder an aufeinanderfolgenden Werkstücken in einem automatischen Bearbeitungsablauf ausgeführt werden, muß sichergestellt sein, daß sich jedes dieser Werkzeuge in einem funktionsfähigen Zustand befindet.

Aufgrund der vorstehend angegebenen Tatbestände wurden bereits verschiedene Systeme zur Bruchkontrolle von Bohrern und anderen Werkzeugen insbesondere für Universal-Bohr- und Fräsanlagen entwickelt, mit denen jedes der verschiedenen Werkzeuge vor und nach jedem Bearbeitungsvorgang vermessen werden kann. Die jeweiligen Meßwerte werden entweder in der numerischen Steuereinrichtung der Werkzeugmaschine oder in einer gesonderten Einrichtung elektronisch verglichen und bei größeren Abweichungen erfolgt eine ggf. mit einer optischen oder akustischen Anzeige gekoppelte Markierung des betreffenden Werkzeugs in der Steuerung, durch die z.B. ein nochmaliger Einsatz dieses Werkzeugs verhindert wird.

In der Regel werden elektrooptische Systeme zur Werkzeugbruchüberwachung eingesetzt, deren Lichtquellen und Photozellen im unmittelbaren Arbeitsbereich der Werkzeugmaschine derart angeordnet sind, daß das jeweilige Werkzeug in einer vorbestimmten Länge angestrahlt und die von der Photozelle erfaßte Lichtintensität als Grundlage für den jeweiligen Werkzeugzustand ausgewertet wird. In der Praxis haben sich jedoch bei den nach elektrooptischen Prinzipien arbeitenden Systemen gravierende Nachteile gezeigt. Da nämlich die eingesetzten Werkzeuge sehr unterschiedliche Längen und Durchmesser haben können, müssen entsprechend große räumliche Meßbereiche mit gleicher Genauigkeit überwacht werden können. Darüber hinaus führen die Späne und die Spülflüssigkeit häufig zu Störungen des Kontrollsystems, weil die z.B. an den Bohrerschneiden anhaftenden Späne und/oder Flüssigkeitstropfen zu einer Verfälschung der Meßwerte führen können. Besondere Schwierigkeiten ergeben sich bei sehr dünnen und langen Bohrwerkzeugen.

Aus der EP-A-0 127 751 ist eine gattungsgemäße Vorrichtung zur Kontrolle von im Magazin einer Werkzeugmaschine angeordneten Werkzeugen bekannt, bei welcher in der Achse des jeweils zu kontrollierenden Werkzeugs ein Taststab motorisch längsverschiebbar angeordnet ist. Der hintere Teil des Taststabes sitzt in einem Schlitten, der von einem Motor über einen Riementrieb und zwei Führungsstangen in der Werkzeugachse bewegt wird. Zur Durchführung der Werkzeugbruchüberwachung erfolgt eine Längsverschiebung des Schlittens, bis das vordere Ende des Taststabes die Werkzeugspitze berührt. Durch Wiederholung eines solchen Vorganges vor und nach einer Bearbeitung, kann die ggf. durch einen Werkzeugbruch hervorgerufene Verkürzung des Werkzeuges in einer elektronischen Auswerteinrichtung festgestellt werden. Der wesentliche Nachteil dieser Vorrichtung zur Werkzeugbruchüberwachung liegt einmal in den relativ großen zu bewegenden Massen des Schlittens, durch die der Taststab mit erheblicher Wucht gegen die jeweilige Werkzeugspitze schlägt, und zum anderen in einem beträchtlichen Platzbedarf aufgrund der für unterschiedlich lange Werkzeug benötigten Verschiebewege des Schlittens mit seinem Taststab. Schließlich ist diese bekannte Überwachungseinrichtung relativ teuer, da der Schlitten und auch seine Längsführungen feinbearbeitet werden müssen.

Aufgabe der Erfindung ist es, eine Vorrichtung zur Überwachung und Kontrolle von im Magazin einer Werkzeugmaschine angeordneten Werkzeugen zu schaffen, die bei einfachem konstruktivem Aufbau nur einen geringen Platzbedarf beansprucht und über einen großen Meßbereich verfügt.

Diese Aufgabe wird erfindungsgemäß durch die im Patentanspruch 1 angegebenen Merkmale gelöst.

Bei der erfindungsgemäßen Vorrichtung wird eine über den gesamten relativ großen Meßbereich gleichbleibende Meßgenauigkeit dadurch erzielt, daß der Taststab in jeder seiner Schwenkstellungen mit der gleichen Andruckkraft gegen die Spitze des jeweiligen Werkstücks angedrückt wird, wobei diese vorgegebene Andruckkraft erst dann zur Wirkung gelangt, nachdem das freie Ende des Taststabes bereits an der Werkzeugspitze zur Anlage gekommen ist. Demzufolge können auch Werkzeuge von sehr unterschiedlichen Längen und Durchmessern mit gleicher Genauigkeit und ohne Beeinflussung durch äußere Faktoren auf Bruch kontrolliert werden. Eine Überwachung des zwangsläufig auftretenden Verschleißes der Werkzeugschneiden ist mit dieser Vorrichtung ebenso wie eine Längenmessung zum Zwecke der Nullpunkt-Einstellung der NC-Steuerung der Werkzeugmaschine möglich.

Die erfindungsgemäße Vorrichtung wird bevorzugt bei Universal-Fräs- und Bohrwerken mit Werkzeugspeicher und hohem Automatisierungsgrad eingesetzt. Besonders vorteilhaft wird die erfindungsgemäße Vorrichtung im Bereich der Übergabestation zwischen dem Werkzeugspeicher und der Maschine angeordnet, wobei unmittelbar vor und nach jeder Übergabeoperation durch den Werkzeugwechsler die Länge des in seinem Kegel eingespannten Werkzeugs abgetastet wird. In der Steuereinrichtung der Werkzeugmaschine werden die Meßdaten für das jeweilige Werkzeug vor und nach dem Bearbeitungsvorgang miteinander verglichen, um daraus eine Aussage über einen möglichen Werkzeugbruch herleiten zu können. Durch die Schwenkbewegung des Taststabes quer zur Werkzeugachse ergibt sich eine konstruktiv einfache und platzsparende Ausführung des Antriebs und der Übertragungsmittel zum Taststab, so daß die gesamte Vorrichtung in unmittelbarer Nähe der Werkzeugübergabe zwischen Magazin und Maschine angeordnet werden kann, ohne die Werkzeugwechsel-Vorgänge zu beeinträchtigen.

Eine weitere Ausführung der Erfindung von konstruktiv einfachem Aufbau und hoher Meßgenauigkeit zeichnet sich dadurch aus, daß der Taststab über eine elastische Kupplung mit der Welle des elektrischen Getriebe-Motors und über eine Transmission mit einem Drehgeber verbunden ist. Die elastische Kupplung und der Getriebe-Motor sind so ausgelegt, daß die vorgegebene Andruckkraft nach der Anlage des Taststabes an die Werkzeugspitze durch das Restdrehmoment des Getriebe-Motors und die Elastizität der Kupplung auf den Taststab ausgeübt werden.

Weitere wesentliche Merkmale und Vorteile der Erfindung ergeben sich aus der folgenden Beschreibung von Ausführungsbeispielen anhand der Zeichnung. Es zeigen:

Fig. 1 eine schematische Seitenansicht der Vorrichtung;

Fig. 2 eine teilgeschnittene Draufsicht auf die Vorrichtung nach Figur 1;

Fig. 3 eine Seitenansicht der Vorrichtung nach Figur 2.

Fig. 4 ein anderes Ausführungsbeispiel in schematischer Seitenansicht;

Fig. 5 die Vorrichtung nach Figur 4 im Vertikalschnitt V-V.

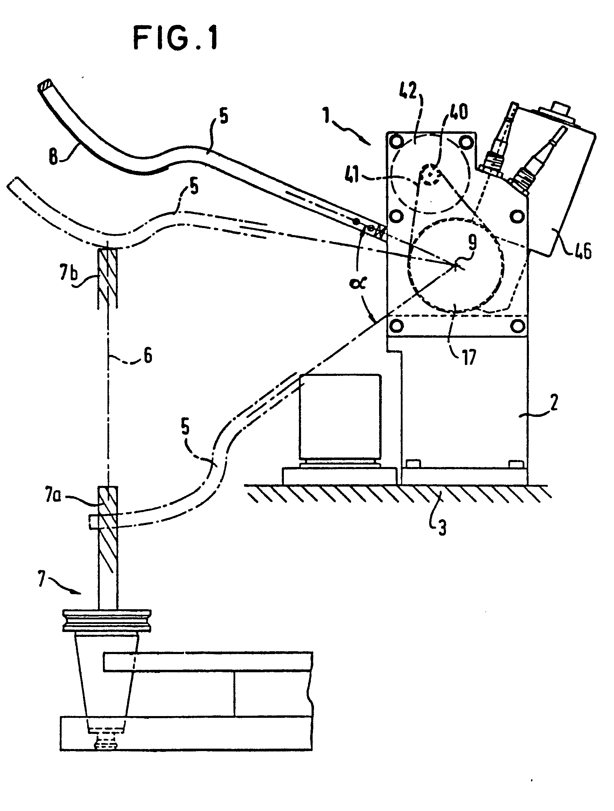

Die in Figur 1 bis 3 dargestellte Vorrichtung zur mechanischen Bohrerbruchüberwachung ist im Bereich der Werkzeugübergabe zwischen dem Maschinenkörper und einem Werkzeugmagazin unmittelbar neben dem Bewegungsraum des Werkzeugwechslers derart montiert, daß ihr Tastfinger 5 seitlich schräg in die vertikale Achse 6 des in der Wechselstation im Werkzeugmagazin befindlichen Werkzeugs 7 — mit üblichem Steilkegel — hineinragt, ohne die Bewegungen des Magazins oder des Wechslers zu beeinträchtigen. Wie aus Figur 1 ersichtlich, ist die Vorrichtung 1 über einen Sockel 2 auf einem ortsfesten Maschinenteil 3 fest montiert. Der zur Vorrichtung 1 gehörige Taststab 5 besteht aus einem Hohlprofil aus z.B. einer Aluminiumlegierung, dessen freies Ende derart bogenförmig ausgebildet ist, daß die Tastfläche im gesamten Meßbereich stets senkrecht zur Achse 6 des Werkzeugs 7 ausgerichtet ist. Auf das bogenförmige Ende des Taststabs 5 ist ein Stahlfederblatt 8 aufgeklebt oder anderweitig befestigt. Der Taststab 5 ist um eine horizontale Querachse 9 in einem Winkelbereich α schwenkbar gelagert, der den Meßbereich darstellt, innerhalb dessen unterschiedlich lange Werkzeuge 7a, 7b ausgemessen werden können.

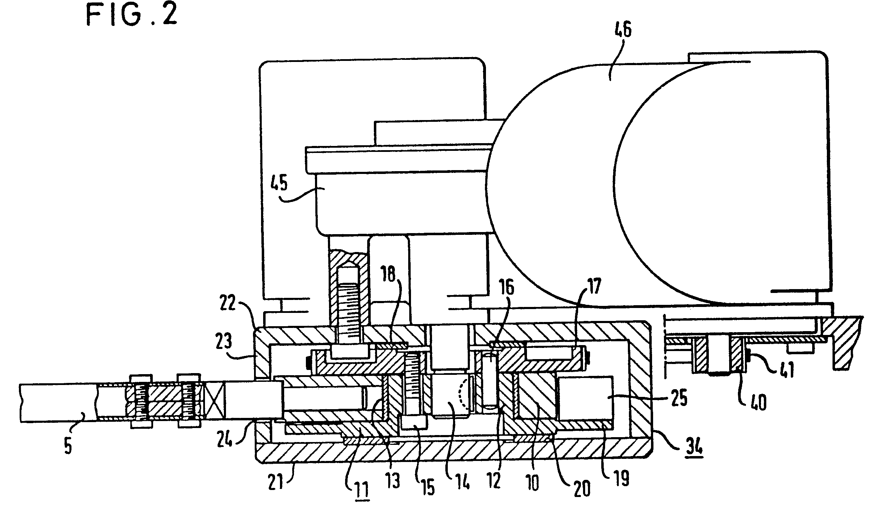

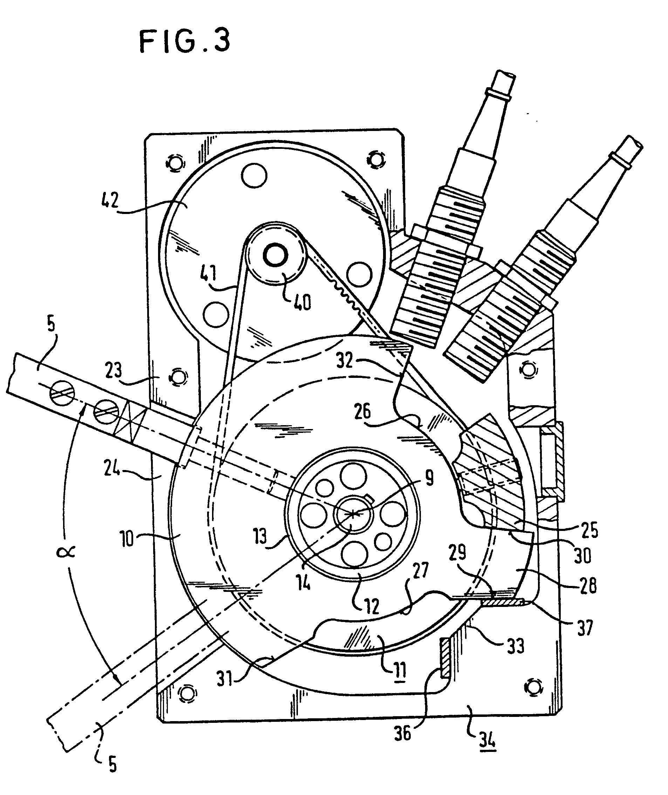

Wie aus den Figuren 2 und 3 ersichtlich, ist das innere Ende des Taststabs 5 radial in einer Mitnehmerscheibe 10 z.B. durch Schrauben befestigt, welche auf einer abgesetzten Profilscheibe 11 gelagert ist. Der radial innere Nabenteil 12 dieser Profilscheibe 11, auf dem außen eine Buchse 13 angeordnet ist, sitzt drehfest auf einer Welle 14 und ist durch Kopfschrauben 15 und Paßstifte 16 drehfest mit einer Zahnriemenscheibe 17 verbunden, welche die Welle 14 mit radialem Spiel umgibt und mit ihrer äußeren Stirnfläche an einem Gleitbelag 18 anliegt. Der äußere — in Figur 2 untere — Teil 19 der Profilscheibe 11 läuft an einem weiteren Gleitbelag 20. Beide Gleitbeläge 18, 20 sind an den beiden Stirnwänden 21, 22 eines Gehäuses 34 befestigt, in dessen linker Seitenwand 23 ein vom Taststab 5 durchragter Ausschnitt 24 ausgebildet ist. Am dünnwandigen Rand des Außenteils 19 der Profilscheibe 11 ist ein Mitnehmeranschlag 25 befestigt, der innerhalb eines kreisbogenförmigen Ausschnitts 26 in der Mitnehmerscheibe 10 begrenzt bewegbar ist (vgl. Figur 3). Die Mitnehmerscheibe 10 weist einen weiteren kreisbogenförmigen Ausschnitt 27 auf. Beide Ausschnitte 26, 27 begrenzen einen Anschlagsteg 28 an der Mitnehmerscheibe 10 mit zwei zueinander parallelen Anschlagflächen 29, 30, von denen die in Figur 3 obere Fläche 30 etwa radial verläuft. Auch die anderen Endkanten der beiden Ausschnitte 26, 27 in der Mitnehmerscheibe 10 sind Anschlagflächen 31, 32. In den Ausschnitt 27 ragt ein Ansatz 33 des Gehäuses 34 hinein, dessen beide mit Stoßplättchen 36, 37 versehene Seitenkanten die ortsfesten Endanschlags-Gegenflächen für die Anschlagflächen 29, 30 der Mitnehmerscheibe 10 bilden. Die Seitenkanten des Mitnehmers 25 bilden die Gegenflächen für die Anschlagflächen 30, 32 im Ausschnitt 26.

Um die Zahnriemenscheibe 17 und um ein Ritzel 40 läuft ein Zahnriemen 41, der die Drehbewegung der Welle 14 über das Ritzel 40 auf einen Meßwertaufnehmer 42 überträgt, welcher an die — nicht dargestellte — numerische Steuereinrichtung der Werkzeugmaschine angeschlossen ist. Die Welle 14 ist die Ausgangswelle eines Getriebes 45, das zusammen mit einem Gleichstrommotor 46, dessen Drehmoment über die Strombegrenzung eingestellt werden kann, einen kompakten Antriebsblock bildet.

Die vorstehend beschriebene Vorrichtung arbeitet wie folgt:

Vor und nach jedem Werkzeugwechsel-Vorgang wird der Gleichstrommotor 46 von der NC-Steuerung der Werkzeugmaschine eingeschaltet, der über das Getriebe 45 und dessen Ausgangswelle 14 die an dieser über eine Paßfeder drehfest befestigte Profilscheibe 11 sowie die damit verstiftete Zahnriemenscheibe 17 im Gegenuhrzeigersinn verdreht. Durch Reibung wird die den Taststab 5 tragende Mitnehmerscheibe 10 soweit mitgenommen, bis der Taststab 5 mit seinem Anschlagbelag 8 gegen die nach oben weisende Werkzeugspitze stößt. In diesem Moment bleiben der Taststab 5 und die Mitnehmerscheibe 10 stehen. Die Profilscheibe 14 wird vom Motor 46 weitergedreht, bis der von ihr radial vorspringende Mitnehmeranschlag 25 mit seiner Seitenkante gegen die Anschlagfläche 32 am Ausschnitt 26 trifft. Der Motor 46 bleibt dann stehen, wobei er noch das über die vorgewählte Stromaufnahme eingestellte Drehmoment über die Profilscheibe 11 und den Mitnehmeranschlag 25 auf den Taststab 5 ausübt, der somit mit einer voreingestellten Kraft gegen die Spitze des nach oben weisend im Werkzeugmagazin gehaltenen Werkzeugs 7 gedrückt wird. In diesem Zustand wird die Messung im Meßwertaufnehmer durchgeführt, dessen Ritzel 40 über den Zahnriemen 41 entsprechend der Verdrehbewegung der Welle 14 und der Profilscheibe 11 verdreht wurde. Nach dem Meßvorgang wird der Motor 46 umgesteuert, wodurch der Taststab 5 in seine oberste Ausgangslage zurückgeführt wird.

Falls in einer entsprechenden Werkzeugaufnahme des Magazins kein Werkzeug vorhanden ist, wird der Taststab 5 bis in seine unterste Stellung bewegt, welche durch Anlage der Anschlagfläche 31 am Ausschnitt 27 an das Stoßplättchen 36 des gehäusefesten Ansatzes 33 bestimmt wird. In den beiden oberen Endlagen des Taststabes werden Endschalter betätigt, welche den Motor 46 abschalten.

Wesentlich bei der Funktion der vorstehend beschriebenen Vorrichtung ist es, daß ein Meßfühler mit seiner Tastspitze kraftlos auf ein aus dem Werkzeugmagazin kommendes Werkzeug aufgelegt wird und daß anschließend der Taststab mit einer an den jeweiligen Werkzeugdurchmesser angepaßten Kraft von 10 N bis 100 N einstellbaren Kraft belastet wird. Der über einen ROD ermittelte Meßwert wird gespeichert. Bei Rückkehr des Werkzeuges aus der Maschine, d.h. nach einem Bearbeitungsvorgang, wird der Meßvorgang wiederholt und seine Ergebnisse mit denen des ersten Meßvorganges verglichen. Dieser Vergleich zeigt dann an, ob während der Bearbeitung der Bohrer gebrochen ist oder nicht.

Die beschriebene Vorrichtung wurde für Bohrerlängen von 100 bis 300 mm und von minimal 1 mm Durchmesser konzipiert.

Gegenüber bekannten Systemen bietet die vorstehend beschriebene Vorrichtung den Vorteil, daß die Meßwerte durch Schmutz und Späne nicht beeinflußt werden, weil durch die vorprogrammierte Krafteinwirkung, mit welcher der Taststab gegen das jeweilige Werkzeug nach seiner vorab erfolgten Anlage gedrückt wird, Späne und andere Schmutzpartikel sowie Flüssigkeitströpfchen weggedrückt werden.

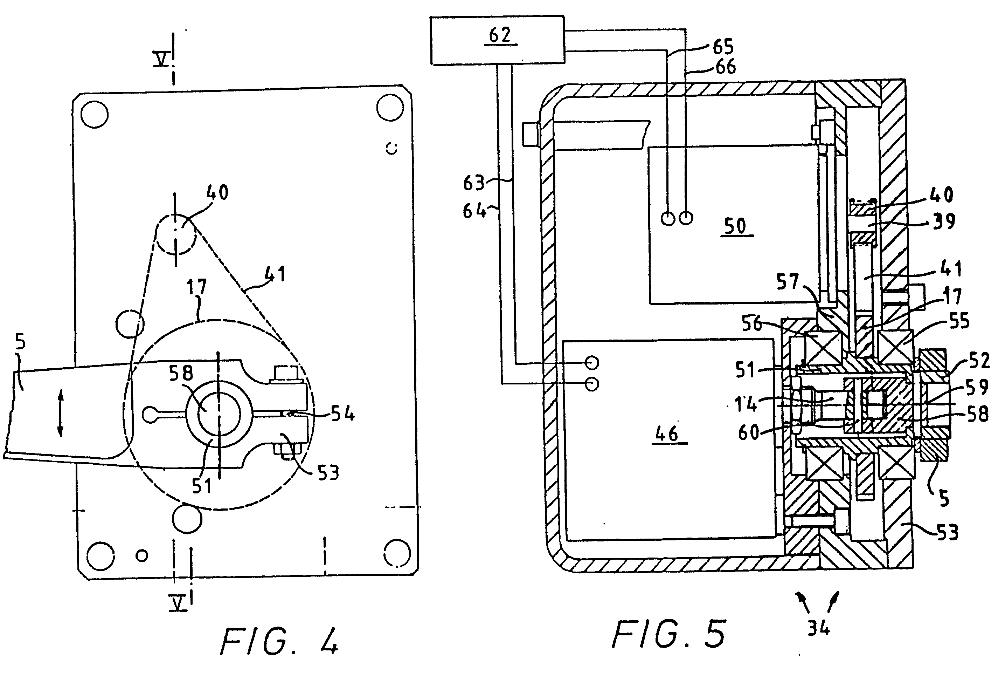

Die in den Figuren 4 und 5 dargestellte Vorrichtung entspricht in ihrem grundsätzlichen Aufbau der vorstehend beschriebenen Vorrichtung nach den Figuren 1 - 3. Aus diesem Grunde sind auch konstruktiv bzw. funktionsmäßig gleiche Teile mit den gleichen Bezugszeichen versehen. Statt der Meßwerterfassung durch Zusammenwirken der den Taststab 5 tragenden Mitnehmerscheibe 10 mit der Profilscheibe 11 werden bei dieser Ausführung nach Figur 4 und 5 die Meßwerte von einem Drehgeber 50 erfaßt, der achsparallel zu dem Getriebe-Motor 46 im Gehäuse 34 montiert ist. Das Ritzel 40 des Drehgebers 50 ist über den Zahnriemen 41 mit dem Zahnrad 17 verbunden, das auf einer Hülse 51 befestigt ist. Auf dem vorderen Ende 52 aus dem Deckel 53 des Gehäuses 34 herausragenden Endstück 52 der Hülse 51 ist der Taststab 5 mit seinem längsgeschlitzten Ende 54 durch eine Schraube 54 festgeklemmt. Die Hülse 51 ist ferner in zwei Lagern 55, 56 im Gehäusedeckel 53 bzw. in einer Zwischenwand 57 gelagert und mit einem verformbaren pfropfenartigen Mittelglied 58 über einen Querstift 59 drehfest verbunden. In dieses pfropfenartig ausgebildete Mittelglied 58 ragt das Ende der Welle 14 des Getriebe-Motors 46, der auch als Schrittmotor ausgebildet sein kann. Die drehfeste Verbindung zwischen dem Wellenende und dem koaxial zur Hülse 51 und zur Welle 14 angeordneten Mittelglied 58 erfolgt über einen zweiten Querstift 60, der in miteinander fluchtende Bohrungen im hohlen Endteil des Mittelglieds 58 und im Wellenende 14 eingepreßt ist.

Die Arbeitsweise der Vorrichtung nach den Figuren 4 und 5 ist folgende:

Vor und nach jedem Werkzeugwechselvorgang wird der Motor 46 von der NC-Steuerung 62 der Werkzeugmaschine über die elektrischen Leitungen 63, 64 eingeschaltet und aktiviert. Die entsprechende Verdrehung seiner Ausgangswelle 14 wird über das als stoßdämpfende elastische Kupplung wirkende Mittelglied 58 auf die drehbar gelagerte Hülse 51 übertragen. Durch die Verdrehung der Hülse 51 führt der Taststab 5 eine Schwenkbewegung in Pfeilrichtung in Figur 4 aus. Gleichzeitig verdreht sich die auf der Hülse 51 befestigte Zahnscheibe 17 und treibt über den Zahnriemen 41 das auf der Welle 39 des Drehgebers 50 befestigte Ritzel 41. Die Verdrehung der Welle 39 wird z.B. durch bekannte elektromagnetische Abtastung in eine entsprechende Anzahl an Impulsen umgesetzt, die der NC-Steuerung 62 der Werkzeugmaschine über die elektrischen Meßleiter 65, 66 zugeführt werden. Die Bewegungen der einzelnen Teile werden durch die Auflage des Taststabs 5 auf der Werkzeugspitze beendet, wobei ein gewisser Nachlauf des Motors 46 in den Grenzen der elastischen Kupplung stattfindet und der Taststab 5 mit einer gewissen vorgegebenen Andruckkraft auf die Werkzeugspitze ausgeübt wird, um die Einflüsse von abgesetzten Partikeln, wie Spänen oder dgl. zu eliminieren.

Die starre Hülse 51 und die Zahnscheibe 17 machen jedoch die Nachlaufbewegung nicht mit, sondern bleiben beim Kontakt des Taststabes 5 auf dem Werkzeug stehen. Gleichzeitig damit kommt auch das Ritzel 40 und die Welle 39 des Drehgebers 50 zum Stillstand. Die Anzahl der während der Drehbewegung vom Drehgeber 50 erzeugten elektrischen Impulse wird z.B. in der NC-Steuerung als Maß für die Größe der Schwenkbewegung des Taststabes 5 erfaßt.

Es ist für einen Fachmann ohne weiteres erkennbar, daß die erfindungsgemäßen Vorrichtungen, insbesondere die Vorrichtung nach den Figuren 4 und 5, nicht nur zur Bruchkontrolle von Werkzeugen sondern auch zu deren Längenmessung eingesetzt werden können, um z.B. den Verschleißzustand eines Werkzeuges bei jedem Wechselvorgang zu erfassen und/oder durch die NC-Steuerung 62 Nullpunkt-Korrekturen vorzunehmen.

Die Vorrichtung nach Figur 4 und 5 ist konstruktiv einfacher und vermeidet Schlagbeanspruchungen des gebogenen Auflageabschnitts des Taststabes 5 aufgrund der elastischen Kupplung zwischen der Motorwelle 14 und der Hülse 51. Der Bewegungsbereich des Taststabes 5 beträgt ca. 60 - 350 mm.

Die Erfindung ist nicht auf die beschriebene Vorrichtung begrenzt. Vielmehr können die mit dem Taststab fest verbundenen Bauteile beispielsweise auch über andere Reibungskupplungen mit der Motorwelle verbunden sein, welche eine erste leichte Anlage des Taststabes an die Werkzeugspitze und einen nachfolgenden Andruck von einstellbarer Größe ermöglichen. Darüber hinaus besteht auch für insbesondere kleinere Meßbereiche grundsätzlich die Möglichkeit, den Taststab an einem parallel zur Werkzeugachse verschiebbar angeordneten Halter zu befestigen und diesen Halter durch einen Linearantrieb, z.B. einen pneumatischen oder hydraulischen Zylinder, einen Zahnstangentrieb oder auch einen Elektromagneten, so weit zu verschieben, bis der in der Längsachse des Werkzeuges befindliche Taststab die Werkzeugspitze berührt. Die jeweilige Messung der Ausfahrstrecke des Halters kann dann z.B. auf induktivem Weg mittels Tauchspulen erfolgen.

**Patentansprüche**

1. Vorrichtung (1) zur Kontrolle von im Werkzeugmagazin einer Werkzeugmaschine angeordneten Werkzeugen (7), bestehend aus einem motorisch bewegbaren Taststab (5), der vor und nach einem Bearbeitungsvorgang gegen die Werkzeugspitze bewegt und angedrückt wird, und aus einer Einrichtung zur Bestimmung der jeweiligen Meßlage des Taststabs, welche die Daten für eine elektronische Auswerteinrichtung liefert, dadurch gekennzeichnet, daß der Taststab (5) um eine quer zur Werkzeugachse (6) verlaufende Achse schwenkbar gelagert ist, daß der Antrieb (45, 46) des Taststabs (5) nach dessen Anlage an die Werkzeugspitze eine voreinstellbare konstante Andruckkraft erzeugt, die unabhängig von der Länge des jeweils gemessenen Werkzeuges (7) ist, und daß ein Drehgeber (42) aus der Größe der Schwenkbewegung des Taststabes (5) die Meßdaten für die elektronische Auswerteinrichtung erzeugt.

2. Vorrichtung nach Anspruch 1, dadurch gekennzeichnet, daß der Taststab radial in einem Drehkörper (10) befestigt ist, der über Mitnehmer (25) mit einer vom Antriebsmotor (46) über ein Getriebe (45) angetriebenen gleichachsigen Profilscheibe (11) über Reibungsschluß begrenzt bewegbar gekuppelt ist.

3. Vorrichtung nach Anspruch 2, dadurch gekennzeichnet, daß in dem scheibenförmigen Drehkörper (10) zwei einen Steg (28) begrenzende Ausschnitte (26, 27) ausgebildet sind, wobei der an der Profilscheibe (11) befestigte Mitnehmer (25) mit totem Gang in den einen Ausschnitt (26) und ein gehäusefester Ansatz (33) in den zweiten Ausschnitt (27) des scheibenförmigen Drehkörpers (10) hineingreifen.

4. Vorrichtung nach Anspruch 1 oder 2, dadurch gekennzeichnet, daß die Tastfläch (8) des Taststabes (5) unabhängig von der Länge des jeweiligen Werkzeuges (7) stets senkrecht zur Werkzeugachse (6) ausgerichtet ist.

5. Vorrichtung nach einem der Ansprüche 2 bis 4, dadurch gekennzeichnet, daß die Ausgangswelle (14) des Getriebes (45) mit der Profilscheibe (11) und mit einer Zahnriemenscheibe (17) drehfest verbunden ist, welche über einen Zahnriemen (41) das Ritzel (40) des Drehgebers (42) antreibt.

6. Vorrichtung nach Anspruch 1, dadurch gekennzeichnet, daß der Taststab (5) über eine elastische Kupplung (58) mit der Welle (14) des elektrischen Getriebe-Motors (46) und über eine Transmission (17, 41, 40) mit dem Drehgeber (50) verbunden ist.

7. Vorrichtung nach Anspruch 6, dadurch gekennzeichnet, daß die elastische Kupplung ein pfropfenartiges elastisches Mittelglied (58) enthält, das einerseits am freien Ende der Welle (14) und andererseits in einer Hülse (51) befestigt ist, auf welcher eine Zahnscheibe (17) fest montiert ist, welche über einen Zahnriemen (41) die Welle (39) des Drehgebers (50) antreibt.

8. Vorrichtung nach Anspruch 7, dadurch gekennzeichnet, daß auf dem vorstehenden Ende der Hülse (51) der Taststab (5) befestigt ist.

9. Vorrichtung nach Anspruch 6, dadurch gekennzeichnet, daß der Elektromotor (46) und der Drehgeber (50) achsparallel in einem Gehäuse (34) angeordnet und über elektrische Leitungen (63 bis 66) mit der NC-Steuereinheit der Werkzeugmaschine verbunden ist.

**Claims**

1. Apparatus (1) for checking tools (7) arranged in the tool magazine of a machine tool, comprising a motor-driven tracer bar (5), which before and after a machining operation is moved and pressed against the point of the tool, and a device for determining the respective measuring position of the tracer bar, which supplies the data for an electronic evaluator, characterised in that the tracer bar (5) is swivel-mounted on a shaft which runs at right angles to the axis of the tool (6), that after being contacted with the point of the tool, the drive (45, 46) of the tracer bar (5) produces a presettable constant contact pressure which is independent of the length of the respective tool (7) measured, and that a shaft encoder (42) uses the variable of the swivel movement of the tracer bar (5) to generate the measurement data for the electronic evaluator.

2. Apparatus according to claim 1, characterised in that the tracer bar is secured radially in a body of revolution (10), which via a friction grip is coupled in a limitedly movable fashion via drivers (25) to a coaxial formed wheel (11) driven by the drive motor (46) via a gear mechanism (45).

3. Apparatus according to claim 2, characterised in that in the disc-shaped body of revolution (10) there are formed two cutouts (26, 27) delimiting a crosspiece (28), the driver (25) attached to the formed wheel (11) engaging with end play in one cutout (26) and a lug (33), integral with the housing, engaging in the second cutout (27) of the disc-shaped body of revolution (10).

4. Apparatus according to claim 1 or 2, characterised in that the tracing surface (8) of the tracer bar (5) is always directed perpendicular to the tool axis (6), irrespective of the length of the particular tool (7).

5. Apparatus according to one of claims 2 to 4, characterised in that the output shaft (14) of the gear mechanism (45) is non-rotatably joined to the formed wheel (11) and to a toothed belt pulley (17) which drives the pinion (40) of the shaft encoder (42) by the agency of a toothed belt (41).

6. Apparatus according to claim 1, characterised in that the tracer bar (5) is joined via a flexible coupling (58) to the shaft (14) of the electric gear motor (46) and via a transmission (17, 41, 40) to the shaft encoder (50).

7. Apparatus according to claim 6, characterised in that the flexible coupling contains a stopper-type flexible central member (58), which on the one hand is fastened to the free end of the shaft (14) and on the other hand in a sleeve (51), on which is fixedly mounted a crown wheel (17) which drives the shaft (39) of the shaft encoder (50) by the agency of a toothed belt (41).

8. Apparatus according to claim 7, characterised in that the tracer bar (5) is fastended on the protruding end of the sleeve (51).

9. Apparatus according to claim 6, characterised in that the electric motor (46) and the shaft encoder (50) are arranged axially parallel in a housing (34) and are linked to the NC unit of the machine tool via electrical cables (63 to 66).

**Revendications**

1. Dispositif (1) pour le contrôle d'outils (7) disposés dans le magasin à outils d'une machine-outil, constitué d'un barreau détecteur (5) qu'un moteur peut déplacer, qui se déplace, avant et après un processus d'usinage, en direction de la pointe de l'outil et vient s'y appuyer, et d'un mécanisme pour déterminer la position respective de l'outil détecteur, qui fournit les données pour un appareil de traitement électronique, caractérisé en ce que le barreau détecteur (5) peut pivoter autour d'un axe dirigé transversalement par rapport à l'axe de l'outil (6), en ce que le mécanisme d'entrainement (45, 46) du barreau détecteur (5), après l'avoir appuyé contre la pointe de l'outil, exerce une force de poussée constante, préréglable, qui est indépendante de la longueur de l'outil chaque fois mesuré (7) et en ce qu'un émetteur d'angle de rotation (42) produit, à partir de la valeur du mouvement de pivotement du barreau détecteur (5), les données de mesure pour le dispositif de traitement électronique.

2. Dispositif selon la revendication 1, caractérisé en ce que le barreau détecteur est fixé radialement dans un organe tournant (10) qui, par l'intermédiaire d'un entraineur (25) est accouplé, par friction et avec possibilité limitée de mouvement, à un disque profilé coaxial (11) entrainé par le moteur d'entrainement (46) par l'intermédiaire d'un mécanisme (45).

3. Dispositif selon la revendication 2, caractérisé en ce que dans l'organe tournant en forme de disque (10) sont formées deux découpes (26, 27) qui limitent une barrette (28), étant précisé que l'entraineur (25) fixé au disque profilé (11) vient en prise, avec une course à vide, dans la première découpe (26) et qu'un bec (33), fixe par rapport au boitier, vient en prise dans la seconde découpe (27) de l'organe tournant en forme de disque (10).

4. Dispositif selon la revendication 1 ou 2, caractérisé en ce que la surface de détection (8) du barreau détecteur (5) est toujours orientée perpendiculairement à l'axe (6) de l'outil, quelle que soit la longueur de l'outil en question (7). .

5. Dispositif selon l'une des revendications 2 à 4, caractérisé en ce que l'arbre de sortie (14) du mécanisme d'entrainement (45) est relié, dans liberté de rotation relative, avec le disque profilé (11) et avec une poulie (17) pour courroie crantée qui entraine le pignon (40) de l'émetteur (42) d'angle de rotation par l'intermédiaire d'une courroie crantée (41).

6. Dispositif selon la revendication 1, caractérisé en ce que le barreau détecteur (5) est relié, par l'intermédiaire d'un accouplement élastique (58), à l'arbre (14) du motoréducteur électrique (46) et, par l'intermédiaire d'une transmission (17, 41, 40), à l'émetteur (50) d'angle de rotation.

7. Dispositif selon la revendication 6, caractérisé en ce que l'accouplement élastique contient un organe intermédiaire élastique (58), en forme de tampon, qui est fixé d'une part à l'extrémité libre de l'arbre (14) et d'autre part dans une douille (51) sur laquelle est rigidement montée une poulie crantée (17) qui entraine l'arbre (39) de l'émetteur (50) d'angle de rotation par l'intermédiaire d'une courroie crantée (41).

8. Dispositif selon la revendication 7, caractérisé en ce que le barreau détecteur (5) est fixé sur l'extrémité débordante de la douille (51).

9. Dispositif selon la revendication 6, caractérisé en ce que le moteur électrique (46) et l'émetteur (50) d'angle de rotation sont disposés coaxialement dans un boitier (34) et sont reliés, par l'intermédiaire de conducteurs électriques (63 à 66), avec l'unité de commande NC de la machine-outil.

# FIG.1

# FIG.2

# FIG.3

FIG. 4

FIG. 5

EP 0 207 481 B1